# EUROPEAN PATENT SPECIFICATION

(11) **EP 2 123 004 B1**
(45) Date of publication and mention of the grant of the patent: **25.05.2011**
(21) Application number: 07804593.7
(22) Date of filing: 11.07.2007
(51) Int. Cl.: H04M 1/57, H04M 1/725, H04M 19/04, H04M 1/60

(54) **SYSTEM AND METHOD FOR TRANSMISSION OF AN ALERT VIA BROADCAST**
SYSTEM UND VERFAHREN ZUR ÜBERTRAGUNG EINES RUFS ÜBER AUSSTRAHLUNG
SYSTÈME ET PROCÉDÉ DE TRANSMISSION D'UNE ALERTE VIA DIFFUSION

(30) Priority: 17.01.2007 US 623798
(43) Date of publication of application: 25.11.2009
(73) Proprietor: Sony Ericsson Mobile Communications AB, 221 88 Lund (SE)
(72) Inventor: KATZ, Darius, S-SE-211 46 Malmö (SE)
(74) Representative: Aurell, Henrik
(86) International application number: PCT/IB2007/001950
(87) International publication number: WO 2008/087472

(56) References cited:
- EP-A- 1 370 053
- WO-A-2006/031685
- US-A1- 2003 144 037
- US-A1- 2006 019 713

## Description

### TECHNICAL FIELD OF THE INVENTION

The present invention relates generally to broadcasting, such as FM broadcasting in accordance with radio data system (RDS). More particularly, the invention relates to a system and method for broadcasting an alert when the transmitting device receives an incoming call or message.

### DESCRIPTION OF THE RELATED ART

Vehicle audio systems are often played at relatively high volume levels. The volume level may be so high that other sounds cannot be heard by the occupants of the vehicle over the audio output from the vehicle audio system. One type of sound that may go unheard is the ringing of a mobile telephone, which may be the playback of a ring tone, for example. To some users, listening to music or a radio show at a low enough volume to hear a telephone ring tone may be unacceptable. At the same time, missing a telephone call may be just as unacceptable to the user.

EP 1 370 053 A1 discloses a hands free mobile phone communication system, a terminal and a method that allows a continuous diffusion of radio signals over dynamically changing unused frequency channels. The basic principles that are disclosed is that unused frequency channels are continuously determined, i.e by carrying out periodically frequency scanning runs in a hands free communication system.

### SUMMARY

To reduce the occurrence of missed telephone calls and/or messages while listening to an audio system, there is a need in the art for a system and method that alerts a user of the audio system to an incoming call and/or message.

According to one aspect of the invention, a mobile radio terminal includes a radio circuit for communicating with a communications network so as to receive at least one of telephone calls or messages; and a FM broadcast transmitter controlled to broadcast a signal corresponding to an alert sound when at least one of an incoming call is received or an incoming message is received via the radio circuit, the signal for receipt by a compatible receiver and the alert sound for alerting a user to the receipt of the call or message by the mobile radio terminal; wherein the signal corresponding to the alert sound is broadcast over a selected set of frequencies.

According to one embodiment of the mobile radio terminal, the set of frequencies includes frequencies that have a corresponding local radio station.

According to one embodiment of the mobile radio terminal, the set of frequencies includes frequencies that correspond to radio stations to which the user prefers to listen.

According to one embodiment of the mobile radio terminal, the signal corresponding to the alert sound is broadcast progressively over multiple frequencies.

According to one embodiment of the mobile radio terminal, the signal corresponding to the alert sound is broadcast over multiple frequencies by sweeping through the frequencies multiple times in an upward or downward direction.

According to one embodiment of the mobile radio terminal, the selected set of frequencies is all frequencies within a frequency transmission range of the transmitter and the signal corresponding to the alert sound is broadcast over all frequencies within the frequency transmission range of the transmitter at the same time.

According to one embodiment of the mobile radio terminal, the alert sound is generated by a text-to-speech synthesizer and the alert sound announces a source of the incoming call or message.

According to one embodiment of the mobile radio terminal, the signal that is broadcast by the transmitter also includes source identification data corresponding to a source of the incoming call or message, the source identification data for display by the receiver.

According to one embodiment of the mobile radio terminal, the transmitter is also controlled to broadcast content corresponding to audio data that is stored by a memory of the mobile radio terminal.

According to another aspect of the invention, a method of alerting a user of a mobile radio terminal to the reception of an incoming call or an incoming message includes receiving the incoming call or message over an interface that is established with a communications network; and broadcasting a signal corresponding to an incoming call or message alert sound in response to the receipt of the call or message with an FM broadcast transmitter, the signal for receipt by a compatible receiver that audibly plays the alert sound back to the user; wherein the signal corresponding to the alert sound is broadcast over a selected set of frequencies.

According to one embodiment of the method, the set of frequencies includes frequencies that have a corresponding local radio station.

According to one embodiment of the method, the set of frequencies includes frequencies that correspond to radio stations to which the user prefers to listen.

According to one embodiment of the method, the signal corresponding to the alert sound is broadcast progressively over the set of frequencies one frequency at a time.

According to one embodiment of the method, the signal corresponding to the alert sound is broadcast over multiple frequencies by sweeping through the frequencies multiple times in an upward or downward direction.

According to one embodiment of the method, the selected set of frequencies is all frequencies within a frequency transmission range of the transmitter and the signal corresponding to the alert sound is broadcast over all frequencies within the frequency transmission range of the transmitter at the same time.

These and further features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the claims appended hereto.

Features that are described and/or illustrated with respect to one embodiment may be used in the same way or in a similar way in one or more other embodiments and/or in combination with or instead of the features of the other embodiments.

It should be emphasized that the terms "comprises" and "comprising," when used in this specification, are taken to specify the presence of stated features, integers, steps or components but do not preclude the presence or addition of one or more other features, integers, steps, components or groups thereof.

### BRIEF DESCRIPTION OF THE DRAWINGS

FIG. 1 is a schematic view of an exemplary alert broadcast system in accordance with an embodiment of the present invention;
FIG. 2 is a schematic block diagram a mobile telephone that represents an exemplary electronic device that may form part of the system of FIG. 1; and
FIG. 3 is a flow chart representing an exemplary method of broadcasting an alert using the mobile telephone of FIG. 2.

### DETAILED DESCRIPTION OF EMBODIMENTS

Embodiments of the present invention will now be described with reference to the drawings, wherein like reference numerals are used to refer to like elements throughout. It will be understood that the figures are not necessarily to scale.

The interchangeable terms "electronic equipment" and "electronic device" include portable radio communication equipment. The term "portable radio communication equipment," which herein after is referred to as a "mobile radio terminal," includes all equipment such as mobile telephones, pagers, communicators, electronic organizers, personal digital assistants (PDAs), smartphones, portable communication apparatus or the like.

In the present application, the invention is described primarily in the context of a mobile telephone. However, it will be appreciated that the invention is not intended to be limited to the context of a mobile telephone and may relate to any type of appropriate electronic equipment, examples of which include a media player, a gaming device and a computer.

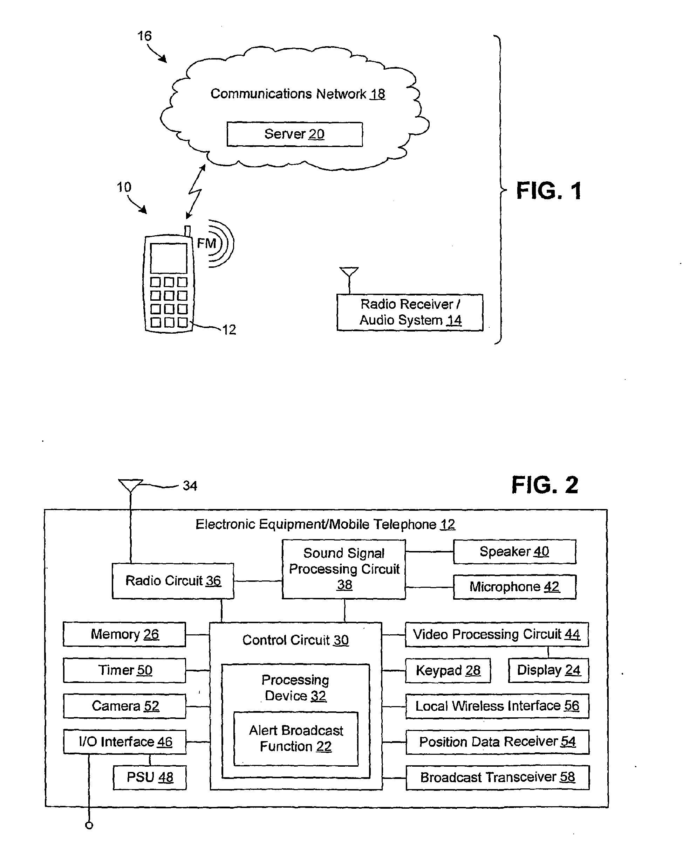

Referring initially to FIG. 1, an exemplary system 10 for alerting a user of an electronic device to an incoming call and/or an incoming message (e.g., a text message, an instant message, a multimedia message, an electronic mail message, etc.) is illustrated. The system 10 may include the electronic device, which is depicted in the illustrated embodiment as a mobile telephone 12. As will be described below, the mobile telephone 12 may be configured to broadcast data for reception by a compatible receiver 14. In one embodiment, the mobile telephone 12 broadcasts a frequency modulated (FM) signal and the receiver 14 is part of an audio system for a vehicle (e.g., a car radio) or part of a home audio system. The illustration of a mobile telephone for the transmitting device and a receiver are for exemplary purposes. Other types of devices may be configured to operate in the system 10 in a similar manner and may replace the mobile telephone and/or the receiver.

The mobile telephone 12 may be configured to operate as part of a communications system 16. The system 16 may include a communications network 18 having a server 20 (or servers) for managing calls placed by and destined to the mobile telephone 12, transmitting data to the mobile telephone 12 and carrying out any other support functions. Network components, including the server 20, may communicate with the mobile telephone 12 via a transmission medium. The transmission medium may be any appropriate device or assembly, including, for example, a communications tower (e.g., a cell tower), another mobile telephone, a wireless access point, a satellite, etc. Portions of the network may include wireless transmission pathways. The network 18 may support the communications activity of multiple mobile telephones. The communications network 18 may be managed and operated by a service provider. It will be appreciated that the network 18 may be typical mobile telephone support network that interfaces with mobile devices under a protocol such as code division multiple access (CDMA) or global system for mobile communications (GSM), or may be some other type of network, such as a WiFi network operating under IEEE standard 802.11 or a WiMax network operating under IEEE 802.16.

With additional reference to FIG. 2, illustrated is a schematic block diagram of the mobile telephone 12. The mobile telephone 12 includes an alert broadcast function 22 that is configured to alert a user to an incoming telephone call and/or an incoming message. Details and operation of the alert broadcast function 22 will be described in greater detail below. The alert broadcast function 22 may be embodied as executable code that is resident in and executed by the mobile telephone 12. In one embodiment, the alert broadcast function 22 may be a program stored on a computer or machine readable medium. The alert broadcast function 22 may be a stand-alone software application or form a part of a software application that carries out additional tasks related to the mobile telephone 12.

The mobile telephone 12 may include a display 24. The display 24 displays information to a user such as operating state, time, telephone numbers, contact information, various navigational menus, etc., which enable the user to utilize the various features of the mobile telephone 12. The display 24 also may be used to visually display content received by the mobile telephone 12 and/or retrieved from a memory 26. The display 24 may be used to present text, images, video and other graphics to the user, such as photographs, mobile television content and video associated with games.

A keypad 28 provides for a variety of user input operations. For example, the keypad 28 typically includes alphanumeric keys for allowing entry of alphanumeric information such as telephone numbers, phone lists, contact information, notes, text, etc. In addition, the keypad 28 typically includes special function keys such as a "call send" key for initiating or answering a call, and a "call end" key for ending or "hanging up" a call. Special function keys also may include menu navigation and select keys to facilitate navigating through a menu displayed on the display 24. Special function keys may include audiovisual content playback keys to start, stop and pause playback, skip or repeat tracks, and so forth. Other keys associated with the mobile telephone may include a volume key, an audio mute key, an on/off power key, a web browser launch key, a camera key, etc. Keys or key-like functionality also may be embodied as a touch screen associated with the display 24. Also, the display 24 and keypad 28 may be used in conjunction with one another to implement soft key functionality.

The mobile telephone 12 includes call circuitry that enables the mobile telephone 12 to establish a call and/or exchange signals with a called/calling device, typically another mobile telephone or landline telephone. However, the called/calling device need not be another telephone, but may be some other device such as an Internet web server, content providing server, etc. Calls may take any suitable form. For example, the call could be a conventional call that is established over a cellular circuit-switched network or a voice over Internet Protocol (VoIP) call that is established over a packet-switched capability of a cellular network or over an alternative packet-switched network, such as WiFi, WiMax, etc. Another example includes a video enabled call that is established over a cellular or alternative network.

The mobile telephone 12 may be configured to transmit, receive and/or process data, such as text messages (e.g., often referred to by some as "an SMS," which stands for simple message service and is a common standard for handling text messages), electronic mail messages, multimedia messages (e.g., often referred to by some as "an MMS," which stands for multimedia message service and is a common standard for handling multimedia messages), instant messages, image files, video files, audio files, ring tones, streaming audio, streaming video, data feeds (including podcasts) and so forth. Processing such data may include storing the data in the memory 26, executing applications to allow user interaction with data, displaying text, video and/or image content associated with the data, outputting audio sounds associated with the data and so forth.

The mobile telephone 12 includes a primary control circuit 30 that is configured to carry out overall control of the functions and operations of the mobile telephone 12. The control circuit 30 may include a processing device 32, such as a CPU, microcontroller or microprocessor. The processing device 32 executes code stored in a memory (not shown) within the control circuit 30 and/or in a separate memory, such as the memory 26, in order to carry out operation of the mobile telephone 12. The memory 26 may be, for example, one or more of a buffer, a flash memory, a hard drive, a removable media, a volatile memory, a non-volatile memory or other suitable device.

In addition, the processing device 32 may execute code that implements the alert broadcast function 22. It will be apparent to a person having ordinary skill in the art of computer programming, and specifically in application programming for mobile telephones or other electronic devices, how to program a mobile telephone 12 to operate and carry out logical functions associated with the alert broadcast function 22. Accordingly, details as to specific programming code have been left out for the sake of brevity. Also, while the alert broadcast function 22 is executed by the processing device 32 in accordance with a preferred embodiment of the invention, such functionality could also be carried out via dedicated hardware, firmware, software, or combinations thereof, without departing from the scope of the invention.

Continuing to refer to FIG. 2, the mobile telephone 12 includes an antenna 34 coupled to a radio circuit 36. The radio circuit 36 includes a radio frequency transmitter and receiver for transmitting and receiving signals via the antenna 34. The radio circuit 36 may be configured to operate in a mobile communications system (e.g., the system 16) and may be used to send and receive data and/or audiovisual content. Receiver types for interaction with a mobile radio network and/or broadcasting network include, but are not limited to, GSM, CDMA, WCDMA, GPRS, MBMS, WiFi, WiMax, DVB-H, ISDB-T, etc., as well as advanced versions of these standards.

The mobile telephone 12 further includes a sound signal processing circuit 38 for processing audio signals transmitted by and received from the radio circuit 36. Coupled to the sound processing circuit 38 are a speaker 40 and a microphone 42 that enable a user to listen and speak via the mobile telephone 12 as is conventional. The radio circuit 36 and sound processing circuit 38 are each coupled to the control circuit 30 so as to carry out overall operation. Audio data may be passed from the control circuit 30 to the sound signal processing circuit 38 for playback to the user. The audio data may include, for example, audio data from an audio file stored by the memory 26 and retrieved by the control circuit 30, or received audio data such as in the form of streaming audio data from a mobile radio service. The sound processing circuit 38 may include any appropriate buffers, decoders, amplifiers and so forth.

The display 24 may be coupled to the control circuit 30 by a video processing circuit 44 that converts video data to a video signal used to drive the display 24. The video processing circuit 44 may include any appropriate buffers, decoders, video data processors and so forth. The video data may be generated by the control circuit 30, retrieved from a video file that is stored in the memory 26, derived from an incoming video data stream received by the radio circuit 36 or obtained by any other suitable method.

The mobile telephone 12 may further include one or more I/O interface(s) 46. The I/O interface(s) 46 may be in the form of typical mobile telephone I/O interfaces and may include one or more electrical connectors. As is typical, the I/O interface(s) 46 may be used to couple the mobile telephone 12 to a battery charger to charge a battery of a power supply unit (PSU) 48 associated with the mobile telephone 12. In addition, or in the alternative, the I/O interface(s) 46 may serve to connect the mobile telephone 12 to a headset assembly (e.g., a personal handsfree (PHF) device) that has a wired interface with the mobile telephone 12. Further, the I/O interface(s) 46 may serve to connect the mobile telephone 12 to a personal computer or other device via a data cable for the exchange of data. The mobile telephone 12 may receive operating power via the I/O interface(s) 46 when connected to a vehicle power adapter or an electricity outlet power adapter.

The mobile telephone 12 also may include a timer 50 for carrying out timing functions. Such functions may include timing the durations of calls, generating the content of time and date stamps, etc. The mobile telephone 12 may include a camera 52 for taking digital pictures and/or movies. Image and/or video files corresponding to the pictures and/or movies may be stored in the memory 26. The mobile telephone 12 may include a position data receiver 54, such as a global positioning system (GPS) receiver, Galileo satellite system receiver or the like.

The mobile telephone 12 also may include a local wireless interface 56, such as an infrared transceiver and/or an RF adaptor (e.g., a Bluetooth adapter), for establishing communication with an accessory, another mobile radio terminal, a computer or another device. For example, the local wireless interface 56 may operatively couple the mobile telephone 12 to a headset assembly (e.g., a PHF device) in an embodiment where the headset assembly has a corresponding wireless interface.

The mobile telephone 12 also may include a broadcast transceiver 58. The broadcast transceiver 58 may be capable of generating FM broadcasts or any other appropriate broadcast or signal transmission that may be received by a compatible device that is tuned to the broadcast frequency of the transceiver 58. The transceiver 58 may be used to broadcast music, speech, or other content for reception by receivers that are located within a transmission range of the transmitter. Current transmitters for inclusion in a device such as the mobile telephone 12 typically have a range of about twenty to thirty meters and operate under an accepted broadcast standard. One such standard is radio data system (RDS) from the European Broadcasting Union. RDS is a standard for sending digital information using a conventional FM radio broadcast. RDS standardizes data transmission formats and the transmission of time data and station identification. In the United States, a similar system is radio broadcast data system (RBDS). RBDS is so similar to RDS and is so often referred to as RDS (instead of RBDS) that the term RDS, as used herein, is intended to include the European standard, the U.S. standard and another other similar approach to radio broadcasting.

In the case of the mobile telephone 12, the broadcast transceiver 58 includes at least a transmitter to transmit signals and also may include a receiver for receiving signals transmitted by another device. In the illustrated embodiment, the broadcast transceiver 58 is an integral part of the mobile telephone 12. In other embodiments, the broadcast transceiver 58 may be an accessory that is operatively interfaced with the mobile telephone 12, such as via the I/O interface 46.

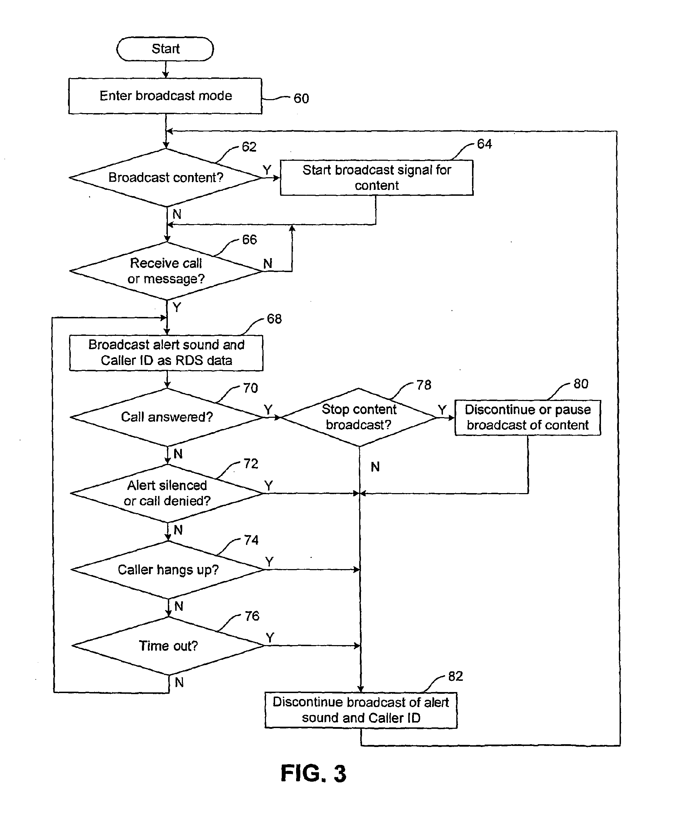

With additional reference to FIG. 3, illustrated are logical operations to implement an exemplary method of alerting a user to an incoming telephone call and/or an incoming message. The exemplary method may be carried out by executing an embodiment of the alert broadcast function 22 with the mobile telephone 12, for example. Thus, the flow chart of FIG. 3 may be thought of as depicting steps of a method carried out by the mobile telephone 12. Although FIG. 3 shows a specific order of executing functional logic blocks, the order of executing the blocks may be changed relative to the order shown. Also, two or more blocks shown in succession may be executed concurrently or with partial concurrence. Certain blocks also may be omitted. In addition, any number of functions, logical operations, commands, state variables, semaphores or messages may be added to the logical flow for purposes of enhanced utility, accounting, performance, measurement, troubleshooting, and the like. It is understood that all such variations are within the scope of the present invention.

The flow chart of FIG. 3 includes functional blocks to broadcast content to devices that have a compatible receiver. Also, functional blocks combine to broadcast an alert indication (e.g., sound) and/or data, such as caller identification (ID) data, to the receiver. It will be appreciated, that these functions will be described as being part of a logical order stemming from the illustrated flow chart. However, in implementation, some or all of these functions may be "turned-on", "turned-off', carried out or omitted based on operating state (e.g., as set through the execution of object-oriented programming) and/or based on user action, such as preference settings and/or menu selections.

The broadcast of the illustrated embodiment is a radio broadcast, such as an FM broadcast under the RDS standard. Other types of broadcasts that are not addressed to a specific electronic device or devices are possible and fall within the applicant's use of the term broadcast. For example, amplitude modulation (AM) radio broadcasts, very high frequency (VHF) broadcasts and/or ultra high frequency (UHF) broadcasts could be used. The content transmitted as part of the broadcast may include any type of audiovisual content. The term "audiovisual content" broadly refers to any type of audio-based and/or video-based subject matter and may include, for example, text (e.g., a collection of alphanumeric characters), images, music, audio, speech, video, and combinations of these content types.

The logical flow for the alert broadcast function 22 may begin in block 60 where the mobile telephone 12 enters a broadcast mode. For instance, the broadcast mode may be selected by a user as the result of navigating through menu choices offered as part of a graphical user interface.

Next, in block 62, a determination may be made as to whether the user would like to broadcast content, such as music or other audio from files stored by the memory 26. If a positive determination is made in block 64, the logical flow may proceed to block 64 where the mobile telephone 12 generates a signal to broadcast content that has been selected by the user. The broadcast signal may be received by the receiver 14 that is tuned to the frequency of the broadcast signal and that is in the broadcast range of the broadcast transceiver 58 of the mobile telephone 12. In turn, the receiver 14 may convert the received broadcast signal into an audible output for listening by the user of the receiver 14. In many instances, the user of the mobile telephone 12 may be the same as the user of the receiver 14. These instances may include, for example, circumstances where the receiver 14 is a radio associated with a vehicle in which the user is an occupant (e.g., driver or passenger) or where the receiver 14 is part of a home audio system. In these exemplary arrangements, the mobile telephone 12 may be used as a media player that delivers content to the receiver 14 that, in turn, generates corresponding audio output to the user.

In other situations, the user may not wish to broadcast content with the mobile telephone 12. For instance, if the receiver 14 were used to tune to a commercial radio station, the user may not wish to broadcast content with the mobile telephone 12. In another example, a media player (e.g., an MP3 player that plays audio files stored in the currently popular MP3 format), a satellite radio receiver or other device may be arranged to broadcast a radio signal to the receiver 14. Thus, following a negative determination in block 62 or following block 64, the logical flow may proceed to block 66.

In block 66, a determination may be made as to whether the mobile telephone 12 has received an incoming call or an incoming message (e.g., an instant message, a text message, a multimedia message, an electronic mail message, etc.). If the mobile telephone 12 has not received a call or message, a negative determination may be made in block 66 and the logical flow may wait for the receipt of a call or a message. Upon the receipt of a call or a message, a positive determination may be made in block 66 and the logical flow may proceed to block 68.

In block 68, an alert sound indicative of an incoming call or message may be broadcast by the broadcast transceiver 58. The alert sound may be a ring tone, beep, sound or combination of sounds normally played by the mobile telephone 12 upon receipt of an incoming call or an incoming message. In other embodiments, the alert sound may be a ring tone, beep, sound or combination of sounds that is different than the audible output normally played by the mobile telephone 12 upon receipt of an incoming call or an incoming message. In addition to the broadcast of the alert sound, the mobile telephone 12 itself may be controlled to generate the audible output normally played by the mobile telephone 12 upon receipt of an incoming call or an incoming message and/or may be controlled to vibrate. Different alert sounds may be used to distinguish between an incoming call and an incoming message. Also, different types of messages may have different associated sounds. In yet another embodiment, the alert sound may be generated by a text-to-speech synthesizer to announce an incoming call by "reading out" caller identification ("caller ID") data or contact list data that matches the source of the call. Similarly, the synthesizer could read out source data to announce an incoming message. As an example, if a call were received from a telephone identified by caller ID data or contact list data as "Michael," the alert sound could be "you have a call from Michael." The synthesizer may be implemented in hardware or as executable logic that is executed by the processing device 32.

In one embodiment, if content is broadcast as a result of the operation of blocks 62 and 64, the broadcast signal corresponding to the content may be supplemented by the addition of the alert sound to the broadcast signal. In another embodiment, the broadcast of content may be temporarily stopped (e.g., the content may be paused) and the alert sound may be broadcast in place of the content. If content is not currently being broadcast as a result of a negative determination in block 62, a broadcast signal may be generated that contains the alert sound.

In addition to broadcasting the alert sound, information relating to the source of the incoming call or message may be broadcast. For instance, for an incoming call, caller identification ("caller ID") data or matching contact list data may be broadcast as RDS data for decoding and display by the receiver 14. For an incoming message, the source information may depend on the type of message and/or the source of the message. Message source information could include, for example, a device address or name, an electronic mail address, a user name, data from a field of a contact list entry that matches the source or other similar information.

The alert sound and/or source identification data may be broadcast on one or more frequencies. In one embodiment, if content is broadcast as a result of the operation of blocks 62 and 64, it may be assumed that the receiver is tuned to broadcast frequency of the transceiver 58. Thus, the alert sound and the source identification data, if broadcast, may be broadcast over the same frequency used to broadcast the content. Alternatively, and for circumstances when content is not broadcast by the mobile telephone 12, the alert sound and/or source information may be broadcast over multiple frequencies. It may be appropriate to broadcast over multiple frequencies since the user may tune the receiver 14 to any frequency within the frequency reception range of the receiver 14. In one embodiment of broadcasting over multiple frequencies, the alert sound and/or source information may be broadcast over all frequencies within the frequency transmission range capability of the transceiver 58 at the same time. In another embodiment, the alert sound and/or source information may be broadcast over a selected set of frequencies at the same time. The set may include only those frequencies that have a corresponding local radio station. The presence or absence of a local radio station for a frequency may be determined using, for example, a signal strength monitor. Alternatively, the set may be established by including frequencies corresponding to radio stations to which the user prefers to listen.

In another embodiment, the alert sound and/or source information may be broadcast over the frequencies in a progressive manner, such as one frequency at a time. In one implementation, a signal may be effectively broadcast over multiple frequencies by sweeping through the frequencies multiple times in an upward or downward direction. The sweep may be made through all frequencies or a set of frequencies, such as a set of frequencies having corresponding local radio stations or a set of frequencies corresponding to radio stations to which the user prefers to listen.

The broadcast of the alert sound and/or source information may continue and/or may be repeated until an event to terminate the broadcast occurs. In the case of a call, the events to terminate the broadcast may include the user answering the call, the user silencing the alert (e.g., by pressing a ringer silencing key), the user denying the call (e.g., by pressing a call declined key), the caller hanging up, and the elapsing of a predetermined amount of time. In the case of a message, the events may include interaction with the message (e.g., displaying the message or acknowledging the message), silencing the alert (e.g., by pressing a silencing key), and the elapsing of a predetermined amount of time. These events and related processing are graphically illustrated in the functional blocks of the flow chart of FIG. 3 that are described below.

Following block 68, the logical flow may proceed to block 70. In block 70 a determination may be made as to whether the user answers the call or, in the case of a message, takes action to display the message or otherwise take action to acknowledge the message. If a negative determination is made in block 70, the logical flow may proceed to block 72 where a determination is made as to whether the user silences the alert sound (e.g., by depressing a ringer silencing button) or denies the call (e.g., by depressing a call denied button). If a negative determination is made in block 72, the logical flow may proceed to block 74 where a determination is made as to whether the call has ended. For purposes of the exemplary logical flow, the call may end by the caller ending the call by "hanging up" or if the incoming call is transferred to a voice mail service. In the case of a message, a negative determination may be automatically made in block 74. If a negative determination is made in block 74, the logical flow may proceed to block 76 where a determination is made as to whether a predetermined amount of time since receiving the call or message has elapsed. Alternatively, the measured duration may commence from the broadcasting of the alert sound. The length of time measured in block 76 for a call may be different than the length of time for a message. If a negative determination is made in block 76, the logical flow may return to block 68 to continue or repeat the broadcast of the alert sound and/or the source information, and to determine if an event to terminate the broadcast has occurred.

Following a positive determination in block 70, the logical flow may proceed to block 78. In block 78, a determination may be made as to whether to discontinue broadcasting content that was started in block 64. If a negative determination was made in block 62 so that no content broadcast was initiated, then a negative determination may be made in block 78. A positive determination may be made in block 78 if the user takes action to stop the broadcast, such as by pressing a predetermined key or by making a particular menu selection. Also, a positive or negative determination may be made in block 78 based on preference settings for the broadcast mode. If a positive determination is made in block 78, the logical flow may proceed to block 80 where the content broadcast is discontinued or paused. Discontinuing the broadcast or pausing the broadcast may allow the user to carry out a conversation with the calling party without the distraction of audible output from the audio system associated with the receiver 14.

Following any one of block 80, a negative determination in block 78 or a positive determination in any of blocks 72, 74 or 76, the logical flow may proceed to block 82. In block 82, the broadcast of the alert sound and/or the source information data may be discontinued. Thereafter, the logical flow may return to block 62 to determine if content should broadcast (e.g., previously paused or stopped content should be restarted) and/or to wait for another incoming call or message.

Systems and methods for alerting a user of an electronic device, such as a mobile telephone, to an incoming call or message have been disclosed. In one embodiment, the electronic device includes a built-in, low-powered FM radio transmitter that broadcasts an alert sound as an FM signal to a receiver for audible playback. The signal may be broadcast on a single frequency, all frequencies at the same time, a set of frequencies at the same time or progressively through multiple frequencies. The broadcast of the alert sound may continue until a specified event, such as the user answering the call, the user silencing the alert, the caller hanging up or the elapsing of a predetermined amount of time. In addition, a phone number and/or a name associated with the calling device may be broadcast as RDS data for display by the receiver.

Although the invention has been shown and described with respect to certain preferred embodiments, it is understood that equivalents and modifications will occur to others skilled in the art upon the reading and understanding of the specification. The present invention includes all such equivalents and modifications, and is limited only by the scope of the following claims.

## Claims

1. A mobile radio terminal (12), comprising:
a radio circuit (36) for communicating with a communications network so as to receive at least one of telephone calls or messages,
**characterized in that** said mobile radio terminal further comprising:
an FM broadcast transmitter (58) controlled to broadcast a signal corresponding to an alert sound when at least one of an incoming call is received or an incoming message is received via the radio circuit, the signal for receipt by a compatible receiver (14) and the alert sound for alerting a user to the receipt of the call or message by the mobile radio terminal;
wherein the signal corresponding to the alert sound is broadcast over a selected set of frequencies.

2. The mobile radio terminal of claim 1, wherein the set of frequencies includes frequencies that have a corresponding local radio station.

3. The mobile radio terminal of claim 1, wherein the set of frequencies includes frequencies that correspond to radio stations to which the user prefers to listen.

4. The mobile radio terminal of any of claims 1-3, wherein the signal corresponding to the alert sound is broadcast progressively over the set of frequencies one frequency at a time.

5. The mobile radio terminal of any of claims 1-4, wherein the signal corresponding to the alert sound is broadcast over multiple frequencies by sweeping through the frequencies multiple times in an upward or downward direction.

6. The mobile radio terminal of claim 1, wherein the selected set of frequencies is all frequencies within a frequency transmission range of the transmitter and the signal corresponding to the alert sound is broadcast over all frequencies within the frequency transmission range of the transmitter at the same time.

7. The mobile radio terminal of any of claims 1-6, wherein the alert sound is generated by a text-to-speech synthesizer and the alert sound announces a source of the incoming call or message.

8. The mobile radio terminal of any of claims 1-8, wherein the signal that is broadcast by the transmitter further includes source identification data corresponding to a source of the incoming call or message, the source identification data for display by the receiver.

9. The mobile radio terminal of any of claims 1-8, wherein the transmitter is also controlled to broadcast content corresponding to audio data that is stored by a memory (26) of the mobile radio terminal.

10. A method of alerting a user of a mobile radio terminal (12) to the reception of an incoming call or an incoming message, comprising:
receiving the incoming call or message over an interface that is established with a communications network (18) **characterized by** further comprising:
broadcasting a signal corresponding to an incoming call or message alert sound in response to the receipt of the call or message with an FM broadcast transmitter, the signal for receipt by a compatible receiver (14) that audibly plays the alert sound back to the user;
wherein the signal corresponding to the alert sound is broadcast over a selected set of frequencies.

11. The method of claim 10, wherein the set of frequencies includes frequencies that have a corresponding local radio station.

12. The method of claim 10, wherein the set of frequencies includes frequencies that correspond to radio stations to which the user prefers to listen.

13. The method of any of claims 10-12, wherein the signal corresponding to the alert sound is broadcast progressively over the set of frequencies one frequency at a time.

14. The method of any of claims 10-13, wherein the signal corresponding to the alert sound is broadcast over multiple frequencies by sweeping through the frequencies multiple times in an upward or downward direction.

15. The method of claim 10, wherein the selected set of frequencies is all frequencies within a frequency transmission range of the transmitter and the signal corresponding to the alert sound is broadcast over all frequencies within the frequency transmission range of the transmitter at the same time.

## Patentansprüche

1. Mobilfunkendgerät (12), umfassend:
eine Funkschaltung (36) zum Kommunizieren mit einem Kommunikationsnetz, um mindestens eines von Telefonanrufen oder Nachrichten zu empfangen,
**dadurch gekennzeichnet, dass** das Mobilfunkendgerät ferner umfasst:
einen FM-Rundsendeübertrager (58), der gesteuert ist, um ein Signal entsprechend einem Alarmsound rundzusenden, wenn mindestens eines von einem eingehenden Anruf empfangen wird oder eine eingehende Nachricht empfangen wird über die Funkschaltung, wobei das Signal zum Empfangen durch einen kompatiblen Empfänger (14) und der Alarmsound zum Alarmieren eines Benutzers über den Empfang des Anrufs oder der Nachricht durch das Mobilfunkendgerät vorgesehen ist, wobei
das Signal entsprechend dem Alarmsound über einen ausgewählten Satz von Frequenzen rundgesendet wird.

2. Mobilfunkendgerät nach Anspruch 1, wobei der Satz von Frequenzen Frequenzen beinhaltet, welche eine entsprechende Lokalfunkstation aufweisen.

3. Mobilfunkendgerät nach Anspruch 1, wobei der Satz von Frequenzen Frequenzen beinhaltet, welche Funkstationen entsprechen, welche der Benutzer bevorzugt hört.

4. Mobilfunkendgerät nach einem der Ansprüche 1 bis 3, wobei das Signal entsprechend dem Alarmsound fortschreitend über den Satz von Frequenzen, eine Frequenz zu einer Zeit, rundgesendet wird.

5. Mobilfunkendgerät nach einem der Ansprüche 1 bis 4, wobei das Signal entsprechend dem Alarmsound über mehrere Frequenzen rundgesendet wird durch mehrmaliges Schweifen durch die Frequenzen in einer Aufwärts- oder Abwärtsrichtung.

6. Mobilfunkendgerät nach Anspruch 1, wobei der ausgewählte Satz von Frequenzen alle Frequenzen innerhalb eines Frequenzübertragungsbereichs des Übertragers sind und das Signal entsprechend dem Alarmsound über alle Frequenzen innerhalb des Frequenzübertragungsbereichs des Übertragers zur gleichen Zeit rundgesendet wird.

7. Mobilfunkendgerät nach einem der Ansprüche 1 bis 6, wobei der Alarmsound durch einen Text-zu-Sprache-Synthesizer erzeugt wird und der Alarmsound eine Quelle des eingehenden Anrufs oder der eingehenden Nachricht bekannt gibt.

8. Mobilfunkendgerät nach einem der Ansprüche 1 bis 7, wobei das Signal, welches durch den Übertrager rundgesendet wird, ferner Quellen-Identifikationsdaten entsprechend einer Quelle des eingehenden Anrufs oder Nachricht beinhaltet, wobei die Quellen-Identifikationsdaten zum Anzeigen durch den Empfänger vorgesehen sind.

9. Mobilfunkendgerät nach einem der Ansprüche 1 bis 8, wobei der Übertrager ebenfalls gesteuert wird, um Inhalt entsprechend Audiodaten rundzusenden, welcher durch einen Speicher (26) des Mobilfunkendgeräts gespeichert wird.

10. Verfahren zum Alarmieren eines Benutzers eines Mobilfunkendgeräts (12) über den Empfang eines eingehenden Anrufs oder einer eingehenden Nachricht, umfassend:
Empfangen des eingehenden Anrufs oder Nachricht über eine Schnittstelle, welche mit einem Kommunikationsnetz (18) hergestellt ist, **gekennzeichnet durch** ferner umfassen:
Rundsenden eines Signals entsprechend eines eingehenden Anruf- oder Nachricht-Alarmsounds in Antwort auf dem Empfang des Anrufs oder der Nachricht mit einem FM-Rundsendeübertrager, wobei das Signal vorgesehen ist zum Empfangen **durch** einen kompatiblen Empfänger (14), welcher den Alarmsound zu dem Benutzer hörbar wiedergibt;
wobei das Signal entsprechend dem Alarmsound über einen ausgewählten Satz von Frequenzen rundgesendet wird.

11. Verfahren nach Anspruch 10, wobei der Satz von Frequenzen Frequenzen beinhaltet, welche eine entsprechende Lokalfunkstation aufweisen.

12. Verfahren nach Anspruch 10, wobei der Satz von Frequenzen Frequenzen beinhaltet, welche Funkstationen entsprechen, welche der Benutzer bevorzugt hört.

13. Verfahren nach einem der Ansprüche 10 bis 12, wobei das Signal entsprechend dem Alarmsound fortschreitend über den Satz von Frequenzen, eine Frequenz zu einer Zeit, rundgesendet wird.

14. Verfahren nach einem der Ansprüche 10 bis 13, wobei das Signal entsprechend dem Alarmsound über mehrere Frequenzen rundgesendet wird durch mehrmaliges Schweifen durch die Frequenzen in einer Aufwärts- oder Abwärtsrichtung.

15. Verfahren nach Anspruch 10, wobei der ausgewählte Satz von Frequenzen alle Frequenzen innerhalb eines Frequenzübertragungsbereichs des Übertragers sind und das Signal entsprechend dem Alarmsound über alle Frequenzen innerhalb des Frequenzübertragungsbereichs des Übertragers zu derselben Zeit rundgesendet wird.

## Revendications

1. Terminal radio mobile (12) comprenant :
un circuit radio (36) pour communiquer avec des réseaux de communication afin de recevoir au moins l'un parmi des messages ou des appels téléphoniques,
ledit terminal radio mobile étant **caractérisé en ce qu'**il comprend en outre :
un émetteur de diffusion FM (58) commandé en vue de diffuser un signal correspondant à une alerte sonore lorsqu'au moins l'un d'un appel entrant est reçu ou d'un message entrant est reçu par l'intermédiaire du circuit radio, le signal devant être reçu par un récepteur compatible (14) et l'alerte sonore visant à alerter un utilisateur de la réception de l'appel ou du message par le terminal radio mobile ;
dans lequel le signal correspondant à l'alerte sonore est diffusé sur un ensemble de fréquences sélectionné.

2. Terminal radio mobile de la revendication 1, dans lequel l'ensemble de fréquences comporte des fréquences qui ont une station radio locale correspondante.

3. Terminal radio mobile de la revendication 1, dans lequel l'ensemble de fréquences comporte des fréquences qui correspondent à des stations radio que l'utilisateur préfère écouter.

4. Terminal radio mobile de l'une quelconque des revendications 1 à 3, dans lequel le signal correspondant à l'alerte sonore est progressivement diffusé sur l'ensemble de fréquences, une fréquence à la fois.

5. Terminal mobile de l'une quelconque des revendications 1 à 4, dans lequel le signal correspondant à l'alerte sonore est diffusé sur plusieurs fréquences en passant entre les fréquences plusieurs fois dans une direction montante ou descendante.

6. Terminal radio mobile de la revendication 1, dans lequel l'ensemble de fréquences sélectionné consiste en l'ensemble des fréquences se trouvant dans une plage de fréquences de transmission de l'émetteur et le signal correspondant à l'alerte sonore est diffusé sur toutes les fréquences dans la plage de fréquences de transmission de l'émetteur en même temps.

7. Terminal radio mobile de l'une quelconque des revendications 1 à 6, dans lequel l'alerte sonore est générée par un synthétiseur de la parole à partir du texte et l'alerte sonore annonce une source de l'appel entrant ou du message entrant.

8. Terminal radio mobile de l'une quelconque des revendications 1 à 8, dans lequel le signal qui est diffusé par l'émetteur comporte en outre des données d'identification de source correspondant à une source de l'appel entrant ou du message entrant, les données d'identification de source devant être affichées par le récepteur.

9. Terminal radio mobile de l'une quelconque des revendications 1 à 8, dans lequel l'émetteur est également commandé en vue de diffuser du contenu correspondant à des données audio qui sont stockées par une mémoire (26) du terminal radio mobile.

10. Procédé destiné à alerter un utilisateur d'un terminal radio mobile (12) de la réception d'un appel entrant ou d'un message entrant, comprenant le fait :
de recevoir l'appel ou le message entrant sur une interface qui est établie avec un réseau de communications (18) **caractérisé par** le fait de comprendre en outre :
la diffusion d'un signal correspondant à une alerte sonore d'un appel ou message entrant en réponse à la réception de l'appel ou message par un émetteur de diffusion FM, le signal devant être reçu par un récepteur compatible (14) qui reproduit de manière audible l'alerte sonore à l'attention de l'utilisateur ;
dans lequel le signal correspondant à l'alerte sonore est diffusé sur un ensemble de fréquences sélectionné.

11. Procédé de la revendication 10, dans lequel l'ensemble de fréquences comporte des fréquences qui ont une station radio locale correspondante.

12. Procédé de la revendication 10, dans lequel l'ensemble de fréquences comporte des fréquences qui correspondent à des stations radio que l'utilisateur préfère écouter.

13. Procédé de l'une quelconque des revendications 10 à 12, dans lequel le signal correspondant à l'alerte sonore est progressivement diffusé sur l'ensemble de fréquences, une fréquence à la fois.

14. Procédé de l'une quelconque des revendications 10 à 13, dans lequel le signal correspondant à l'alerte sonore est diffusé sur plusieurs fréquences en passant entre les fréquences plusieurs fois dans une direction montante ou descendante.

15. Procédé de la revendication 10, dans lequel l'ensemble de fréquences sélectionné consiste en l'ensemble des fréquences dans une plage de fréquences de transmission de l'émetteur et le signal correspondant à l'alerte sonore est diffusé sur toutes les fréquences dans la plage de fréquences de transmission de l'émetteur en même temps.
